(19) **Europäisches Patentamt / European Patent Office / Office européen des brevets**

(11) **EP 2 600 345 B1**

(12) **EUROPEAN PATENT SPECIFICATION**

(45) Date of publication and mention
of the grant of the patent:
**21.04.2021 Bulletin 2021/16**

(51) Int Cl.:
*G10L 25/00* $^{(2013.01)}$     *H02J 7/02* $^{(2016.01)}$

(21) Application number: **12190321.5**

(22) Date of filing: **29.10.2012**

(54) **Method and apparatus for detecting signal envelope**

Verfahren und Vorrichtung zur Erkennung der Signaleinhüllenden

Procédé et appareil de détection d'enveloppe

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2011 KR 20110128451**

(43) Date of publication of application:
**05.06.2013 Bulletin 2013/23**

(73) Proprietor: **Samsung Electronics Co., Ltd.
Gyeonggi-do 443-742 (KR)**

(72) Inventors:
 • **Yoon, Seung Keun**
 **446-712 Gyeonggi-do (KR)**
 • **Kwon, Ui Kun**
 **446-712 Gyeonggi-do (KR)**
 • **Kim, Sang Joon**
 **446-712 Gyeonggi-do (KR)**

(74) Representative: **Grootscholten, Johannes A.M. et al
Arnold & Siedsma
Bezuidenhoutseweg 57
2594 AC The Hague (NL)**

(56) References cited:
**WO-A1-2004/021363     US-A1- 2003 093 447**

• **CARLOS FRITSCH ET AL: "A Digital Envelope Detection Filter for Real-Time Operation", IEEE TRANSACTIONS ON INSTRUMENTATION AND MEASUREMENT, IEEE SERVICE CENTER, PISCATAWAY, NJ, US, vol. 48, no. 6, 1 December 1999 (1999-12-01), XP011024874, ISSN: 0018-9456**
• **XU Z ET AL: "An alternative envelope approach for empirical mode decomposition", DIGITAL SIGNAL PROCESSING, ACADEMIC PRESS, ORLANDO,FL, US, vol. 20, no. 1, 1 January 2010 (2010-01-01), pages 77-84, XP026764632, ISSN: 1051-2004, DOI: 10.1016/J.DSP.2009.06.009 [retrieved on 2009-06-06]**
• **Ui Kun Kwon ET AL: "Synchronization Algorithm of Resonator Isolation System for Efficient Power and Data Transmission", Globecom 2012 - Signal Processing for Communications Symposium, 3 December 2012 (2012-12-03), pages 3970-3975, XP055057489, Disney Resort Destinations Anaheim, CA, USA Retrieved from the Internet: URL:http://www-mobile.ecs.soton.ac.uk/home /conference/Globecom_12/papers/p3970-kwon. pdf [retrieved on 2013-03-22]**

**Description**

**BACKGROUND**

**1. Field**

The following description relates to a method and apparatus for detecting an envelope.

**2. Description of Related Art**

Envelope detection is used to process signals in various fields, for example, in a speech processing field, an image processing field, a data communication field, and the like, in which a modulating signal is received and demodulated. As another example, the envelope detection may be used in a field such as energy or data transmission.

In a typical envelope detection method, signal processing is performed. For example, the signal processing may include filtering using a band-pass filter or a low-pass filter in a frequency band, a scheme of using a peak hold in an analytic signal obtained by the Hilbert transform, and the like. However, signal processing may require a considerable amount of circuit complexity for implementation. In lower complexity schemes that include an analog circuit such as a diode, a capacitor, and the like, the circuit complexity is reduced. However, these low complexity schemes struggle to detect a sophisticated envelope.

Here, US-2003/093447 is acknowledged as prior art, relative to which at least features in the appended independent claims are novel of: distinguishing equidistant pairs of sampled signals relative to a centre sampled signal from at least five sampled signals, calculating the product of multiplication of the pairs, adding the multiplication products, and deducing the summed result from the squared centre or target sampled signal, and for at least five sampled signals adjusting the respective intervals.

**SUMMARY**

In one aspect, there is provided a method of detecting an envelope, the method including features defined in the appended independent method claim.

In an aspect, there is provided a non-transitory computer readable recording medium storing a program to cause a computer to implement the method.

In an aspect, there is provided an apparatus for detecting an envelope, the apparatus including features of the appended independent apparatus claim.

These and/or other features and aspects will be apparent from the following detailed description, the drawings, and the claims.

**BRIEF DESCRIPTION OF THE DRAWINGS**

FIG. 1 is a graph illustrating an example of an envelope detected from a sine wave.
FIG. 2 is a diagram illustrating an example of detecting an envelope.
FIG. 3 is a flowchart illustrating an example of a method for detecting an envelope.
FIG. 4 is a flowchart illustrating an example of calculating envelope component values in the method of FIG. 3.
FIG. 5 is a graph illustrating an example of an envelope detected from sampled signals with a Sequential Envelope Detection (SED) gap of $\Delta t$ and a SED rate of 1/6 $\Delta t$.
FIG. 6 is a graph illustrating an example of an envelope detected from sampled signals with a SED gap of $\Delta t$ and a SED rate of 1/12 $\Delta t$.
FIG. 7 is a graph illustrating an example of an envelope detected from sampled signals with a SED gap of 2At and a SED rate of 1/12 $\Delta t$.
FIG. 8 is a diagram illustrating an example of an envelope detection apparatus.
FIG. 9 is a graph illustrating an example of a change in a maximum value of k using a function of a sampling rate $f_s/f_c$ for a carrier frequency.
FIG. 10 is a graph illustrating another example of a change in a maximum value of k using a function of a sampling rate $f_s/f_c$ for a carrier frequency.
FIG. 11 is a graph illustrating another example of a change in a maximum value of k using a function of a sampling rate $f_s/f_c$ for a carrier frequency.

Throughout the drawings and the detailed description, unless otherwise described, the same drawing reference numerals will be understood to refer to the same elements, features, and structures. The relative size and depiction of these elements may be exaggerated for clarity, illustration, and convenience.

## DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, description of well-known functions and constructions may be omitted for increased clarity and conciseness.

As one example, the envelope detection technology herein may be used to exchange control information or other information between devices such as a transmitter and a receiver in a wireless power transmission system. In this example, the wireless power transmission system may be used to wirelessly charge a target device with power.

It should also be appreciated that the examples herein are not limited thereto. For example, the envelope detection technology may be used in various fields, for example, in a speech processing field, an image processing field, a data communication field, and the like, in which a modulating signal is received and demodulated.

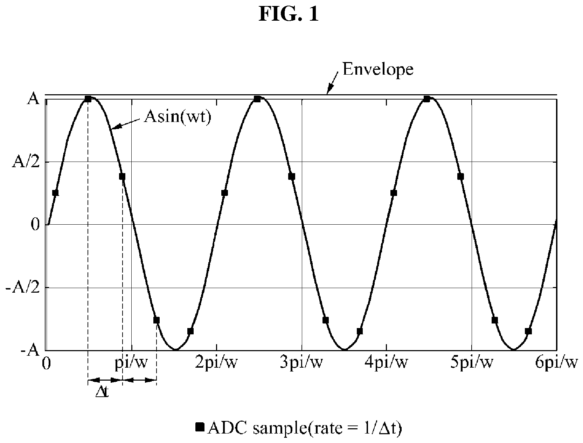

FIG. 1 illustrates an example of an envelope detected from a sine wave.

The example of FIG. 1 illustrates a sine wave-shaped signal waveform. An envelope may be obtained by connecting peak values of a waveform of a modulated carrier wave signal, and may be referred to as an 'envelope curve.'

A continuous sine wave x(t) is represented by the following Equation 1:

[Equation 1]

$$x(t) = A\sin(2\pi f_c t + \theta)$$

In Equation 1, $A$ denotes an amplitude of a sine wave and has a predetermined constant value, and $f_c$ denotes a carrier frequency. Additionally, $\theta$ denotes a phase value between '0' and '$2\pi$.' Furthermore, $x(t)$ denotes sampled signals corresponding to a modulating signal that is obtained by an Analog-to-Digital Convertor (ADC), and may be expressed as $x(t_1)$, $x(t_2)$, $x(t_3)$, ... , and $x(t_m)$ . The sampled signals may be referred to as ADC samples.

An interval between two sampled signals may be defined as $\Delta t$. For example, if signals are sampled at equal intervals $f_s$ of $1/\Delta t$, three consecutive sampled signals with equal intervals may be expressed as $x(T-\tau)$, $x(T)$, and $x(T+\tau)$. In this example, a value of $\tau$ may be a constant multiple of $\Delta t$.

Additionally, the three consecutive sampled signals may be represented as shown in the following Equation 2:

[Equation 2]

$$[x(T-\tau), x(T), x(T+\tau)] = [A\sin(\alpha-\varepsilon), A\sin(\alpha), A\sin(\alpha+\varepsilon)]$$

In Equation 2, $\alpha = 2\pi f_c T + \theta$, $\varepsilon = 2\pi f_c \tau$, and $\tau = c\Delta t$ where c is an integer.

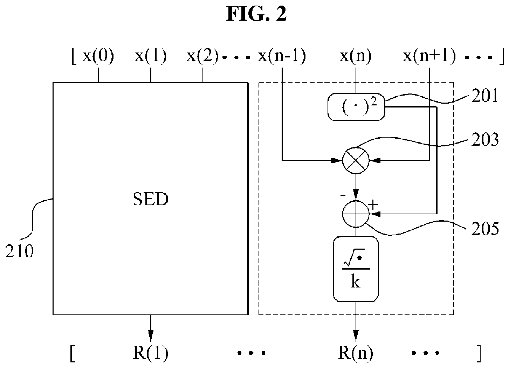

The three consecutive sampled signals may be input to a Sequential Envelope Detection (SED) 210 apparatus of FIG. 2, and may be computed using the following Equation 3:

[Equation 3]

$$
\begin{aligned}
(kR(T))^2 &= x(T)^2 - x(T-\tau)\cdot x(T+\tau) \\
&= A^2\left(\sin^2\alpha - \sin(\alpha-\varepsilon)\cdot\sin(\alpha+\varepsilon)\right) \\
&= A^2\left(\sin^2\alpha + \frac{1}{2}(\cos 2\alpha - \cos 2\varepsilon)\right) \\
&= A^2\left(\sin^2\alpha + \frac{1}{2}((1-2\sin^2\alpha - 1 + 2\sin^2\varepsilon))\right) \\
&= A^2\sin^2\varepsilon
\end{aligned}
$$

In Equation 3, $\varepsilon$ is equal to '$2\pi f_c\tau$.' Accordingly, $\sin^2\varepsilon$ may be equal to '$\sin^2(2\pi f_c\, c\Delta t)$,' namely, a constant that is already known. For example, if $k$ is set to $\sin\varepsilon$, and if a square root operation is performed on a square of an envelope component such as $A$, a value of A may be extracted as shown in Equation 4:

[Equation 4]

$$
R(T) = \frac{1}{k}\sqrt{A^2\sin^2\varepsilon} = A
$$

When $\varepsilon$ in Equation 4 is not equal to '$n\pi$,' an accurate value of $A$ may be extracted. In addition, if $\sin\varepsilon$ is close to 1 even though an accurate value of a scaling factor $k$ set to $\sin\varepsilon$ is not known, an envelope may be restored robustly against the scaling factor $k$.

$$
wc\Delta t \approx \left(\frac{1}{2}+n\right)\pi
$$

An example in which $\sin\varepsilon$ is close to 1 may satisfy $\qquad\qquad\qquad$ .

FIG. 2 illustrates an example of detecting an envelope.

Referring to FIG. 2, SED 210 refers to an apparatus for sequentially detecting an envelope. For example, the SED 210 may calculate a single envelope component value using a plurality of sampled signals corresponding to a modulating signal. As an example, '2N+1' sampled signals may be sampled at equal intervals, where N is a natural number that is equal to or greater than '1.'

The sine wave x(t) may correspond to a modulating signal from which an envelope is to be detected, as shown in FIG. 1, and may be represented using an envelope component R(n) and a carrier component '$\sin(2\pi f_c T+\theta)$.'

Referring to FIG. 2, sampled signals are expressed as x(0), x(1), x(2), x(n-1), x(n), x(n+1), and the like. The SED 210 may sample the '2N+1' sampled signals from the modulating signal. In this example, the SED 210 may perform squaring 201 on a sampled signal x(n), multiplication 203 on sampled signals x(n-1) and x(n+1), and addition 205 on two values obtained by the squaring 201 and the multiplication 203.

Through the above-described example process, the SED 210 may calculate a single envelope component value. This process may be repeated until an overall envelope of the modulating signal is obtained.

The SED 210 may sample '2N+1' sampled signals from the modulating signal, and Equation 3 may be generalized to be the following Equation 5:

[Equation 5]

$$\left(k_N R(T)\right)^2 = Nx(T)^2 - \sum_{j=1}^{N} x(T-\tau_j) \cdot x(T+\tau_j)$$

$$\left(k_N\right)^2 = \sum_{j=1}^{N} \sin^2 \varepsilon_j$$

In Equation 5, a constant $k_N$ has a value of ⎵, $\varepsilon_j$ has a value of $\varepsilon_j = 2\pi f_c \tau_j$, and $\tau_j$ has a value of $\tau_j = c_j \Delta t$ ($c_i \neq c_j$, if $i \neq j$). In this example, an interval between values of $\tau_j$ does not need to be equal.

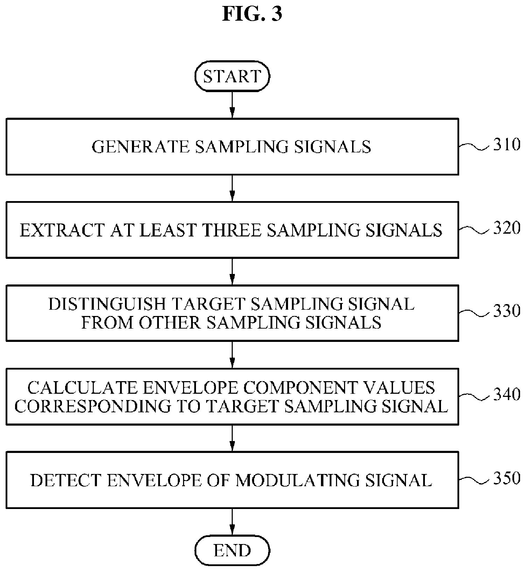

FIG. 3 illustrates an example of a method for detecting an envelope.

Referring to FIG. 3, in 310, an apparatus for detecting an envelope (hereinafter, referred to as an 'envelope detection apparatus') generates a plurality of sampled signals. The sampled signals may correspond to a modulating signal. The sampled signals do not necessarily need to be consecutively provided. Additionally, in an example in which intervals between sampled signals are equal, sampled signals corresponding to one of two modulating signals, or one of three modulating signals may be generated.

In 320, the envelope detection apparatus extracts at least three sampled signals from among the generated sampled signals. The extracted sampled signals may be sampled at equal time intervals. For example, '2N+1' sampled signals may be extracted, where N is a natural number that is equal to or greater than '1.' For example, the number of sampled signals extracted may be an odd number equal to or greater than '3', for example 3, 5, 7, and the like.

In the example of 320, the at least three sampled signals may include a first sampled signal, a second sampled signal, and a third sampled signal. A first time interval between the first sampled signal and the second sampled signal may be equal to a second time interval between the second sampled signal and the third sampled signal. For example, the first time interval may be set to $\Delta t$ and the second time interval may also be set to $\Delta t$. In another example, the first time interval may be set to $2\Delta t$ and the second time interval may also be set to $2\Delta t$.

In 330, the envelope detection apparatus distinguishes a single target sampled signal from among the extracted sampled signals. The target sampled signal may be expressed as, for example x(n), and the other sampled signals may expressed as, for example x(n-1) and x(n+1), or x(n-2), x(n-1), x(n+1) and x(n+2).

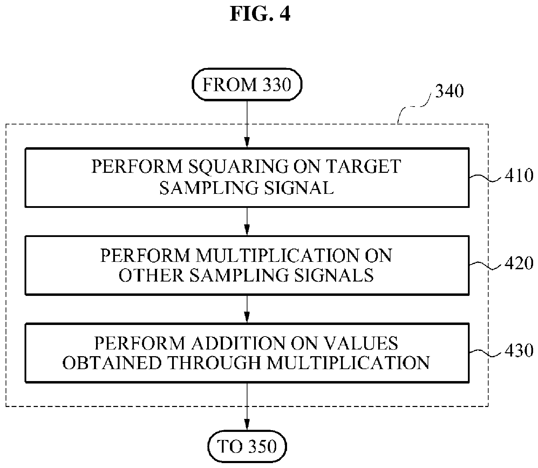

In 340, the envelope detection apparatus calculates envelope component values corresponding to the target sampled signal, based on a difference between a component associated with the target sampled signal and components associated with the other sampled signals, as shown in Equation 3 or 5. An example of 340 is described with reference to FIG. 4.

In 350, the envelope detection apparatus detects an envelope of the modulating signal based on the calculated envelope component values.

FIG. 4 illustrates an example of operation 340 of FIG. 3.

Referring to FIG. 4, in 410, the envelope detection apparatus performs squaring on the target sampled signal, to calculate a component that is associated with the target sampled signal. In 420, the envelope detection apparatus performs multiplication on the other sampled signals to calculate components that are associated with the other sampled signals. For example, the envelope detection apparatus may perform squaring on the target sampled signal x(T), to calculate a component x(T)$^2$ associated with the target sampled signal x(T), and may perform multiplication on sampled signals x(T-$\tau$) and x(T+$\tau$) to calculate a component 'x(T-$\tau$)*x(T+$\tau$).'

In 430, the envelope detection apparatus performs addition on values obtained through multiplication of the other sampled signals. For example, five sampled signals may be sampled. The envelope detection apparatus may perform addition on four of the values 'x(T-$\tau$)*x(T+$\tau$),' 'x(T-2$\tau$)* x(T+2$\tau$),' and the like, that are obtained through multiplication of sampled signals x(T-2$\tau$), x(T-$\tau$), x(T+$\tau$), and x(T+2$\tau$) excluding the target sampled signal x(T).

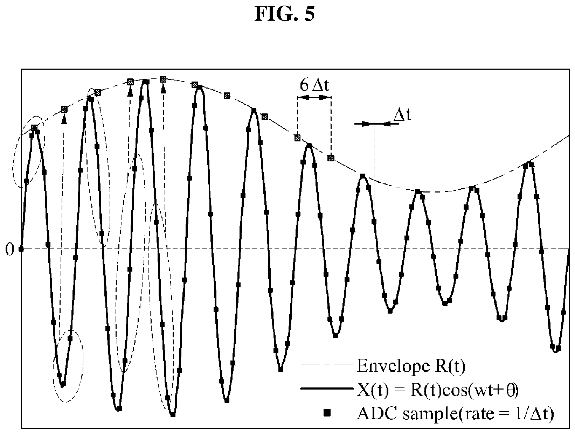

FIG. 5 illustrates an example of an envelope detected from sampled signals with a SED gap of $\Delta t$ and a SED rate of 1/6 $\Delta t$.

Referring to FIG. 5, two parameters are defined. A SED gap refers to a time interval between consecutive sampled signals x(t) and is used to extract a single envelope component value R(n). Additionally, a SED rate is the inverse of a sampling period of the sampled signals.

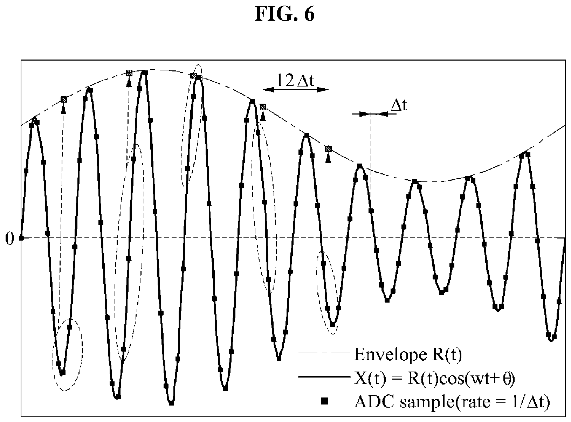

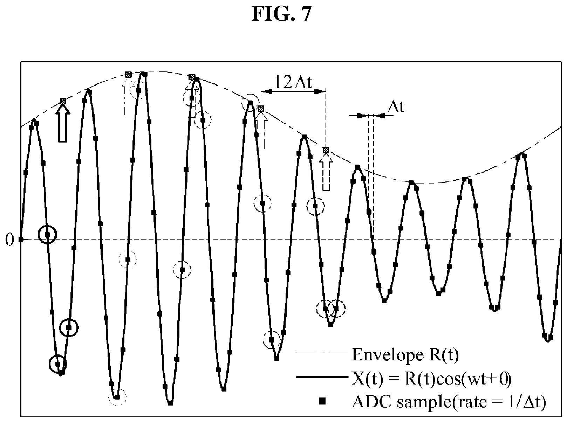

FIG. 6 illustrates an example of an envelope detected from sampled signals with a SED gap of $\Delta t$ and a SED rate of 1/12 $\Delta t$, and FIG. 7 illustrates an example of an envelope detected from sampled signals with a SED gap of 2$\Delta t$ and a SED rate of 1/12 $\Delta t$.

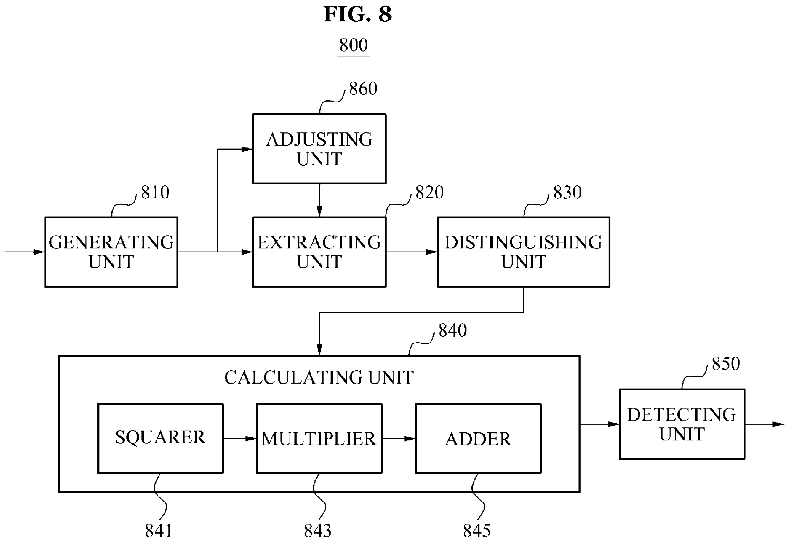

FIG. 8 illustrates an example of an envelope detection apparatus.

Referring to FIG. 8, envelope detection apparatus 800 includes a generating unit 810, an extracting unit 820, a distinguishing unit 830, a calculating unit 840, and a detecting unit 850. The envelope detection apparatus 800 may further include an adjusting unit 860.

The generating unit 810 may generate a plurality of sampled signals corresponding to a modulating signal.

The extracting unit 820 may extract at least three sampled signals from among the plurality of sampled signals. For example, the extracted sampled signals may be sampled at equal time intervals. As an example, '2N+1' sampled signals may be extracted where N is a natural number that is equal to or greater than '1.' For example, a number of extracted sampled signals may be an odd number equal to or greater than '3', for example 3, 5, 7, and the like.

The at least three sampled signals may include at least a first sampled signal, a second sampled signal, and a third sampled signal. In this example, a first time interval between the first sampled signal and the second sampled signal may be equal to a second time interval between the second sampled signal and the third sampled signal.

For example, if the at least three sampled signals include a first sampled signal, a second sampled signal, a third sampled signal, a fourth sampled signal, and a fifth sampled signal, a first time interval between the first sampled signal and the second sampled signal, a second time interval between the second sampled signal and the third sampled signal, a third time interval between the third sampled signal and the fourth sampled signal, and a fourth time interval between the fourth sampled signal and the fifth sampled signal may be equal to each other.

The sampled signals may not be consecutively provided. Additionally, if intervals between sampled signals are equal, sampled signals corresponding to one of two modulating signals, or one of three modulating signals may be generated.

The distinguishing unit 830 may distinguish a single target sampled signal from among the extracted sampled signals.

The calculating unit 840 may calculate envelope component values corresponding to the target sampled signal. For example, the calculating unit may calculate envelope components based on a difference between a component associated with the target sampled signal and components associated with the other sampled signals. In the example of FIG. 8, the calculating unit 840 includes a squarer 841, a multiplier 843, and an adder 845.

The squarer 841 may perform squaring on the target sampled signal, to calculate a component associated with the target sampled signal. The multiplier 843 may perform multiplication on the other sampled signals except for the target sampled signal to calculate components associated with the other sampled signals. Additionally, the addition operator 845 may perform addition for $\Sigma$ operation on values obtained by multiplying the other sampled signals. The squarer 841, the multiplier 843, and the adder 845 included in the calculating unit 840 may perform calculation using the above-described Equation 3 or 5.

The detecting unit 850 may detect an envelope of the modulating signal based on the envelope component values.

The adjusting unit 860 may adjust time intervals between sampled signals. For example, the adjusting unit 860 may adjust a value of a first time interval between the first sampled signal and the second sampled signal, and may adjust a value of a second time interval between the second sampled signal and the third sampled signal, and the like.

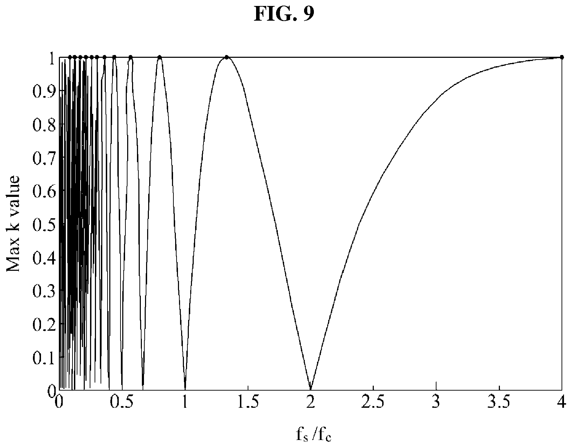

FIG. 9 illustrates an example of a change in a maximum value of k using a function of a sampling rate $f_s/f_c$ for a carrier frequency. In this example, an envelope is detected using three consecutive sampled signals with a SEP gap of $\Delta t$ among a plurality of sampled signals.

In a graph of FIG. 9, dots correspond to k with a value of '1,' and are identical to dots in which an interval

$$\Delta t = \left( \frac{1}{2} + n \right) \frac{\pi}{w}$$

between sampled signals corresponds to in a square sum root scheme when a SED gap is $\Delta t$. As illustrated in FIG. 9, an envelope may be detected even though an interval between neighboring sampled signals does

$$\Delta t = \left( \frac{1}{2} + n \right) \frac{\pi}{w}$$

not correspond to (except for an example in which the sampling rate $f_s/f_c$ is equal to '1/n' where n is 0.5 or an integer).

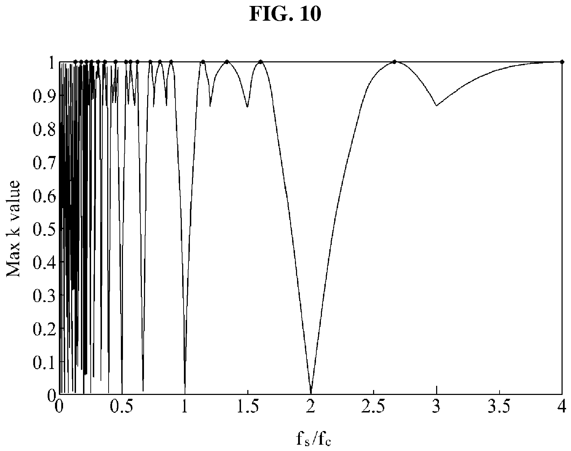

FIG. 10 illustrates another example of a change in a maximum value of k using a function of a sampling rate $f_s/f_c$ for a carrier frequency. In this example, three consecutive sampled signals with a SEP gap of $\Delta t$ are compared with three consecutive sampled signals with a SEP gap of $2\Delta t$, among a plurality of sampled signals.

Referring to FIG. 10, an envelope may be detected regardless of a value of the sampling rate $f_s/f_c$, except for an example in which the sampling rate $f_s/f_c$ is equal to '1/n' where n may be 0.5, 1, 2, and the like. In this example, as

the sampling rate $f_s/f_c$ satisfying 'k=1' increases, a more sophisticated envelope may be detected.

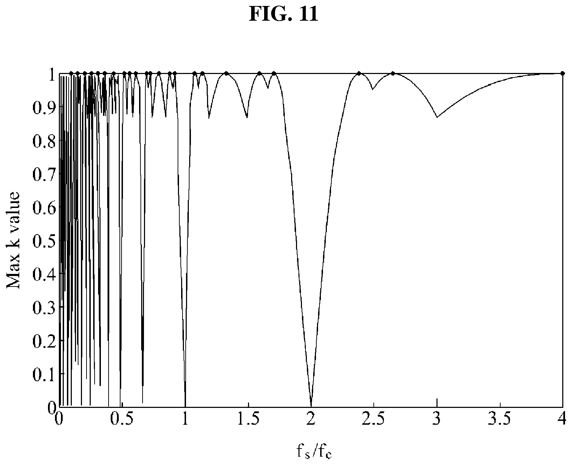

FIG. 11 illustrates another example of a change in a maximum value of k using a function of a sampling rate $f_s/f_c$ for a carrier frequency. In this example, three consecutive sampled signals with a SEP gap of $\Delta t$ are compared with three consecutive sampled signals with a SEP gap of $2\Delta t$, and with three consecutive sampled signals with a SEP gap of $3\Delta t$, among a plurality of sampled signals.

A graph of FIG. 11 is similar to a graph of FIG. 10. If the SED gap is increased from $\Delta t$ to $3\Delta t$, the sampling rate $f_s/f_c$ satisfying 'k=1' may be increased. Accordingly, a range for detecting a more sophisticated envelope may be widened.

The above-described examples of detecting an envelope may be implemented using various ways based on a SED gap and a SED rate. For example, if an interval between sampled signals (namely, ADC samples) is greater than $\Delta t$, a SED gap may have a minimum value of $\Delta t$, and a SED rate may have a maximum value of $1/\Delta t$.

Additionally, the method of detecting an envelope may satisfy only a condition of equal intervals between '2N+1' sampled signals that are used to obtain an envelope component value, without a need to fix a SED gap and a SED rate. In this example, N is a natural number equal to or greater than '1.'

Accordingly, it is possible to increase or reduce the SED rate as desired, and to increase an accuracy of an envelope detected by applying different SED gaps to a single envelope component value.

For example, in wireless power transmission the envelope may correspond to the point in time at which the greatest amount of power is transmitted by a wireless power source or a point in time at which the greatest amount of power is received by a target device. Accordingly, accurate detection of the envelope may lead to an increase in the efficiency of the wireless power transmission used to charge the target device.

The above-described envelope detection apparatus may be used to exchange control information or other information between a transmitter and a receiver in a system in which wireless power transmission is performed, for example, a terminal, a mobile phone, a wireless television (TV), and the like. As another example, the envelope detection apparatus may be applied to a bio-healthcare field, and may be used to remotely transmit power to a device inserted into a human body, or used to wirelessly transmit power to a bandage-shaped device for measurement of a heart rate.

According to various aspects, it is possible to detect an envelope of a modulating signal based on only a low calculation complexity and a simple circuit configuration, by detecting an envelope for a plurality of sampled signals with equal time intervals.

According to various aspects, it is possible to accurately detect an envelope based on a predetermined sampling rate for a modulating signal, by adjusting a first time interval between a first sampled signal and a second sampled signal, and adjusting a second time interval between the second sampled signal and a third sampled signal, among a plurality of sampled signals.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable storage mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

As a non-exhaustive illustration only, a terminal/device/transmitter/receiver described herein may refer to mobile devices such as a cellular phone, a personal digital assistant (PDA), a digital camera, a portable game console, and an MP3 player, a portable/personal multimedia player (PMP), a handheld e-book, a portable laptop PC, a global positioning system (GPS) navigation, a tablet, a sensor, and devices such as a desktop PC, a high definition television (HDTV), an optical disc player, a setup box, a home appliance, and the like that are capable of wireless communication or network communication consistent with that which is disclosed herein.

A computing system or a computer may include a microprocessor that is electrically connected with a bus, a user interface, and a memory controller. It may further include a flash memory device. The flash memory device may store N-bit data via the memory controller. The N-bit data is processed or will be processed by the microprocessor and N may be 1 or an integer greater than 1. Where the computing system or computer is a mobile apparatus, a battery may be additionally provided to supply operation voltage of the computing system or computer. It will be apparent to those of ordinary skill in the art that the computing system or computer may further include an application chipset, a camera image processor (CIS), a mobile Dynamic Random Access Memory (DRAM), and the like. The memory controller and the flash memory device may constitute a solid state drive/disk (SSD) that uses a non-volatile memory to store data.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. However, the scope of protection is as defined by the following claims.

**Claims**

1. A method of detecting an envelope of a modulating signal, to exchange information between devices, the method comprising:

extracting an odd number, 2N+1, of 5 or higher of sampled signals from among a plurality of sampled signals corresponding to the modulating signal;

distinguishing a target sampled signal x(T) from among the extracted sampled signals as the center sampled signal and at least two pairs of other extracted sampled signals x(T-$\tau_j$) and x(T+$\tau_j$) at equal intervals $\Delta t$ relative to the center sampled signal;

calculating an envelope component value R(T) associated with the target sampled signal, based on differences between a component value associated with the target sampled signal and component values associated with the at least two pairs of other sampled signals from among the extracted sampled signals by, using a calculating unit,

\*solving - for R(T) - the following equation a plurality of times:

$$\left(k_N R(T)\right)^2 = Nx(T)^2 - \sum_{j=1}^{N} x(T - \tau_j) \cdot x(T + \tau_j)$$

based on 2N+1 sampled signals x(t) from the modulating signal, wherein natural number N > 1 and constant

$k_N$ has a value of $\left(k_N\right)^2 = \sum_{j=1}^{N} \sin^2 \varepsilon_j$ , $\varepsilon_j$ has a value of $\varepsilon_j = 2\pi f_c \tau_j$ , and $\tau_j$ has a value of $\tau_j = c_j \Delta t$, with $f_c$ being the carrier frequency, and c an integer; and

\*detecting the envelope of the modulating signal based on the calculated envelope component values.

2. A non-transitory computer readable recording medium storing a program configured to cause a computer to implement the method of claim 1.

3. An apparatus for detecting an envelope of a modulating signal, to exchange information between devices, the apparatus comprising:

an extracting unit configured to extract an odd number, 2N+1, of 5 or higher of sampled signals from among a plurality of sampled signals corresponding to the modulating signal;

a distinguishing unit configured to distinguish a target sampled signal x(T) from among the extracted sampled signals as the center sampled signal and at least two pairs of other extracted sampled signals x(T-$\tau_j$) and x(T+$\tau_j$) at equal intervals relative to the center sampled signal;

a calculating unit configured to calculate an envelope component value R(T) associated with the target sampled signal, based on differences between a component value associated with the target sampled signal and component values associated with the at least two pairs of other sampled signals from among the extracted sampled signals, with the calculating unit at least comprising: a squarer; multipliers; an adder; and a subtractor; whereby the calculating unit is configured to solve - for R(T) - the following equation a plurality of times

$$\left(k_N R(T)\right)^2 = Nx(T)^2 - \sum_{j=1}^{N} x(T - \tau_j) \cdot x(T + \tau_j)$$

based on 2N+1 sampled signals x(t) from the modulating signal, wherein natural number N > 1 and constant

$$\left(k_N\right)^2 = \sum_{j=1}^{N} \sin^2 \varepsilon_j$$

$k_N$ has a value of _____, $\varepsilon_j$ has a value of $\varepsilon_j = 2\pi f_c \tau_j$, and $\tau_j$ has a value of $\tau_j = c_j \Delta t$, with fc being the carrier frequency, and c an integer; and
a detecting unit configured to detect the envelope of the modulating signal based on the calculated envelope component values.

**4.** The apparatus of claim 3, further comprising:
a generating unit performing generating the plurality of sampled signals corresponding to the modulating signal.


**Patentansprüche**

**1.** Verfahren zur Erkennung einer Hüllkurve eines Modulationssignals zum Austausch von Informationen zwischen Geräten, wobei das Verfahren Folgendes umfasst:

Extrahieren einer ungeraden Zahl 2N+1 von wenigstens 5 Abtastsignalen aus einer Vielzahl von Abtastsignalen, die dem Modulationssignal entsprechen;
Unterscheiden eines Ziel-Abtastsignals x(T) von den extrahierten Abtastsignalen als Mitten-Abtastsignal und mindestens zwei Paaren von anderen extrahierten Abtastsignalen x(T-$\tau_j$) und x(T+$\tau_j$) in gleichen Intervallen $\Delta t$ relativ zu dem Mitten-Abtastsignal;
Berechnen eines Hüllkurvenkomponentenwerts R(T), der dem Ziel-Abtastsignal zugeordnet ist, basierend auf Differenzen zwischen einem Komponentenwert, der dem Ziel-Abtastsignal zugeordnet ist, und Komponentenwerten, die den mindestens zwei Paaren von anderen Abtastsignalen zugeordnet sind, aus den extrahierten Abtastsignalen unter Verwendung einer Recheneinheit, durch Folgendes:

*Lösen - für R(T) - der folgenden Gleichung eine Vielzahl von Malen:

$$\left(k_N R(T)\right)^2 = Nx(T)^2 - \sum_{j=1}^{N} x(T - \tau_j) \cdot x(T + \tau_j)$$

basierend auf 2N+1 Abtastsignalen x(t) aus dem Modulationssignal, wobei die natürliche Zahl N > 1 und

$$\left(k_N\right)^2 = \sum_{j=1}^{N} \sin^2 \varepsilon_j$$

die Konstante $k_N$ einen Wert von _____ aufweist, $\varepsilon_j$ einen Wert von $\varepsilon_j = 2\pi f_c \tau_j$ aufweist und $\tau_j$ einen Wert von $\tau_j = c_j \Delta t$ aufweist, wobei es sich bei $f_c$ um die Trägerfrequenz handelt und bei c um eine ganze Zahl; und
*Erkennen der Hüllkurve des Modulationssignals basierend auf den berechneten Hüllkurvenkomponentenwerten.

**2.** Nicht flüchtiges, computerlesbares Speichermedium, auf dem ein Programm gespeichert ist, das dazu konfiguriert ist, einen Computer dazu zu veranlassen, das Verfahren nach Anspruch 1 auszuführen.

**3.** Vorrichtung zur Erkennung einer Hüllkurve eines Modulationssignals zum Austausch von Informationen zwischen Geräten, wobei die Vorrichtung Folgendes umfasst:

eine Extraktionseinheit, die konfiguriert ist zum Extrahieren einer ungeraden Zahl 2N+1 von wenigstens 5 Abtastsignalen aus einer Vielzahl von Abtastsignalen, die dem Modulationssignal entsprechen;

eine Unterscheidungseinheit, die konfiguriert ist zum Unterscheiden eines Ziel-Abtastsignals $x(T)$ von den extrahierten Abtastsignalen als Mitten-Abtastsignal und mindestens zwei Paaren von anderen extrahierten Abtastsignalen $x(T-\tau_j)$ und $x(T+\tau_j)$ in gleichen Intervallen relativ zu dem Mitten-Abtastsignal;

eine Berechnungseinheit, die konfiguriert ist zum Berechnen eines Hüllkurvenkomponentenwerts $R(T)$, der dem Ziel-Abtastsignal zugeordnet ist, basierend auf Differenzen zwischen einem Komponentenwert, der dem Ziel-Abtastsignal zugeordnet ist, und Komponentenwerten, die den mindestens zwei Paaren von anderen Abtastsignalen zugeordnet sind, aus den extrahierten Abtastsignalen, wobei die Berechnungseinheit wenigstens Folgendes umfasst: einen Quadrierer; Multiplikatoren; einen Addierer; und einen Subtrahierer; wobei die Berechnungseinheit konfiguriert ist zum Lösen - für $R(T)$ - der folgenden Gleichung eine Vielzahl von Malen:

$$\left(k_N R(T)\right)^2 = Nx(T)^2 - \sum_{j=1}^{N} x(T-\tau_j) \cdot x(T+\tau_j)$$

basierend auf 2N+1 Abtastsignal $x(t)$ aus dem Modulationssignal, wobei die natürliche Zahl $N > 1$ und die

$$\left(k_N\right)^2 = \sum_{j=1}^{N} \sin^2 \varepsilon_j$$

Konstante $k_N$ einen Wert von aufweist, $\varepsilon_j$ einen Wert von $\varepsilon_j = 2\pi f_c \tau_j$ aufweist und $\tau_j$ einen Wert von $\tau_j = c_j \Delta t$ aufweist, wobei es sich bei $f_c$ um die Trägerfrequenz handelt und bei c um eine ganze Zahl; und

eine Erkennungseinheit, die konfiguriert ist zum Erkennen der Hüllkurve des Modulationssignals basierend auf den berechneten Hüllkurvenkomponentenwerten.

4. Vorrichtung nach Anspruch 3, die weiterhin Folgendes umfasst:
   eine Erzeugungseinheit, die ein Erzeugen der Vielzahl von Abtastsignalen, die dem Modulationssignal entsprechen, durchführt.


**Revendications**

1. Procédé de détection d'une enveloppe d'un signal de modulation, permettant d'échanger des informations entre appareils, le procédé comprenant :

l'extraction d'un nombre impair, 2N+1, d'au moins 5 signaux échantillonnés parmi une pluralité de signaux échantillonnés correspondant au signal de modulation ;

la distinction d'un signal échantillonné cible $x(T)$ parmi les signaux échantillonnés extraits en tant que signal échantillonné central et d'au moins deux paires d'autres signaux échantillonnés extraits $x(T-\tau_j)$ et $x(T+\tau_j)$ à des intervalles $\Delta t$ égaux par rapport au signal échantillonné central ;

le calcul d'une valeur de composante d'enveloppe $R(T)$ associée au signal échantillonné cible, compte tenu de différences entre une valeur de composante associée au signal échantillonné cible et des valeurs de composante associées aux au moins deux paires d'autres signaux échantillonnés parmi les signaux échantillonnés extraits, grâce aux opérations suivantes réalisées par une unité de calcul :

*résolution - pour $R(T)$ - de l'équation suivante une pluralité de fois :

$$\left(k_N R(T)\right)^2 = Nx(T)^2 - \sum_{j=1}^{N} x(T-\tau_j) \cdot x(T+\tau_j)$$

à partir de 2N+1 signaux échantillonnés $x(t)$ issus du signal de modulation, dans laquelle le nombre naturel N > 1 et la constante $k_N$ a une valeur $$\left(k_N\right)^2 = \sum_{j=1}^{N} \sin^2 \varepsilon_j$$ , $\varepsilon_j$ a une valeur $\varepsilon_j = 2\pi f_c \tau_j$, et $\tau_j$ a une valeur $\tau_j = c_j \varDelta t$, étant entendu *que $f_c$* est la fréquence porteuse et c est un nombre entier ; et

\*détection de l'enveloppe du signal de modulation à partir des valeurs de composante d'enveloppe calculées.

2. Support d'enregistrement non transitoire lisible par ordinateur sur lequel est enregistré un programme conçu pour amener un ordinateur à mettre en œuvre le procédé selon la revendication 1.

3. Dispositif de détection d'une enveloppe d'un signal de modulation, permettant d'échanger des informations entre appareils, le dispositif comprenant :

une unité d'extraction conçue pour extraire un nombre impair, 2N+1, d'au moins 5 signaux échantillonnés parmi une pluralité de signaux échantillonnés correspondant au signal de modulation ;
une unité de distinction conçue pour distinguer un signal échantillonné cible x(T) parmi les signaux échantillonnés extraits en tant que signal échantillonné central et au moins deux paires d'autres signaux échantillonnés extraits x(T-$\tau_j$) et x(T+$\tau_j$) à des intervalles égaux par rapport au signal échantillonné central ;
une unité de calcul conçue pour calculer une valeur de composante d'enveloppe R(T) associée au signal échantillonné cible, compte tenu de différences entre une valeur de composante associée au signal échantillonné cible et des valeurs de composante associées aux au moins deux paires d'autres signaux échantillonnés parmi les signaux échantillonnés extraits, étant entendu que l'unité de calcul comprend au moins : un dispositif d'élévation au carré ; des dispositifs multiplicateurs ; un dispositif additionneur ; et un dispositif soustracteur ; moyennant quoi l'unité de calcul est conçue pour résoudre - pour R(T) - l'équation suivante une pluralité de fois :

$$\left(k_N R(T)\right)^2 = Nx(T)^2 - \sum_{j=1}^{N} x(T - \tau_j) \cdot x(T + \tau_j)$$

à partir de 2N+1 signaux échantillonnés x(t) issus du signal de modulation, dans laquelle le nombre naturel N > 1 et la constante $k_N$ a une valeur $$\left(k_N\right)^2 = \sum_{j=1}^{N} \sin^2 \varepsilon_j$$ , $\varepsilon_j$ a une valeur $\varepsilon_j = 2zf_c \tau_j$, et $\tau_j$ a une valeur $\tau_j = c_j \varDelta t$, étant entendu que $f_c$ est la fréquence porteuse et c est un nombre entier ; et une unité de détection conçue pour détecter l'enveloppe du signal de modulation à partir des valeurs de composante d'enveloppe calculées.

4. Dispositif selon la revendication 3, comprenant en outre :
une unité de génération qui réalise la génération de la pluralité de signaux échantillonnés correspondant au signal de modulation.

**FIG. 1**

## FIG. 2

$[\ x(0)\quad x(1)\quad x(2)\bullet\bullet\bullet\ x(n-1)\quad x(n)\quad x(n+1)\bullet\bullet\bullet\ ]$

SED

210

$(\cdot)^2$ — 201

$\otimes$ — 203

$-\ +$ — 205

$\dfrac{\sqrt{\cdot}}{k}$

$[\qquad R(1)\qquad\bullet\bullet\bullet\qquad R(n)\qquad\bullet\bullet\bullet\qquad ]$

# FIG. 3

START

GENERATE SAMPLING SIGNALS — 310

EXTRACT AT LEAST THREE SAMPLING SIGNALS — 320

DISTINGUISH TARGET SAMPLING SIGNAL
FROM OTHER SAMPLING SIGNALS — 330

CALCULATE ENVELOPE COMPONENT VALUES
CORRESPONDING TO TARGET SAMPLING SIGNAL — 340

DETECT ENVELOPE OF MODULATING SIGNAL — 350

END

**FIG. 4**

**FIG. 5**

## FIG. 6

## FIG. 7

## FIG. 8

<u>800</u>

**FIG. 9**

**FIG. 10**

**FIG. 11**

**EP 2 600 345 B1**

**Patent documents cited in the description**

- US 2003093447 A